## Europäisches Patentamt
## European Patent Office
## Office européen des brevets

(11) Publication number: **0 134 029**
**B1**

(12) **EUROPEAN PATENT SPECIFICATION**

(45) Date of publication of patent specification: **02.05.90**

(51) Int. Cl.⁵: **H 02 P 5/00, G 05 D 3/12**

(21) Application number: **84109548.2**

(22) Date of filing: **10.08.84**

(54) **Speed control arrangement and motor control system.**

(30) Priority: **10.08.83 JP 146232/83**

(43) Date of publication of application:
**13.03.85 Bulletin 85/11**

(45) Publication of the grant of the patent:
**02.05.90 Bulletin 90/18**

(84) Designated Contracting States:
**DE FR GB**

(56) References cited:
**EP-A-0 032 301**
**DE-A-2 823 140**

**IBM TECHNICAL DISCLOSURE BULLETIN, vol.
21, no. 8, January 1979, page 3082; N.K. ARTER
et al.: "Null Positioning"**

(73) Proprietor: **MITSUBISHI DENKI KABUSHIKI
KAISHA
2-3, Marunouchi 2-chome Chiyoda-ku
Tokyo 100 (JP)**

(72) Inventor: **Unno, Mahito Mitsubishi Denki K.K.
Nagoya Works No. 1-14, Yadaminami 5-chome
Higashi-ku Nagoya-shi, Aichi (JP)**
Inventor: **Yamamoto, Katsuhiro Mitsubishi
Denki K.K.
Nagoya Works No. 1-14, Yadaminami 5-chome
Higashi-ku Nagoya-shi, Aichi (JP)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

## Description

The present invention relates to a speed control arrangement for an electric motor. It is applicable to apparatus used, for instance, to stop the rotary shaft of a machine tool such as a punch or lathe at a predetermined position. The invention also relates to motor control systems.

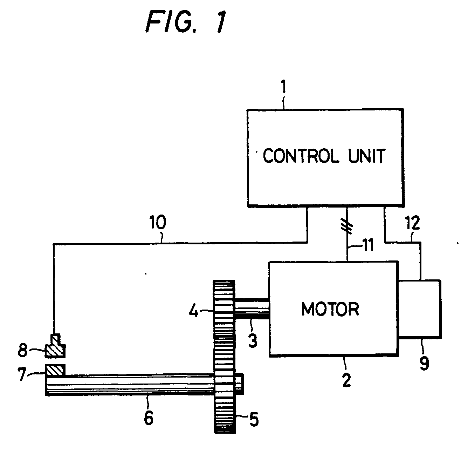

Figure 1 of the accompanying drawings shows the basic construction of a conventional stopping device. The Figure shows a control unit 1; an electric motor 2; a motor shaft 3; gears 4 and 5; a rotary shaft 6 which is to be stopped at a predetermined rotary position thereof; a magnet 7 mounted on the rotary shaft 6; a position detector 8 implemented with a magnetic detector; a pulse encoder 9 for producing an analogue speed signal 12; an output signal 10 provided by the position detector; and a three-phase cable 11.

The operation of the conventional device is as follows: The control unit 1 applies a command to the motor 2 to cause it to selectively rotate the motor shaft 3 so that the rotary shaft 6 is rotated or stopped at a predetermined position through the gears 4 and 5. The position of the rotary shaft is detected by the position detector 8 by detecting the position of the magnet 7 on the rotary shaft 6. The output signal 10 of the position detector 8 is supplied to the control unit 1.

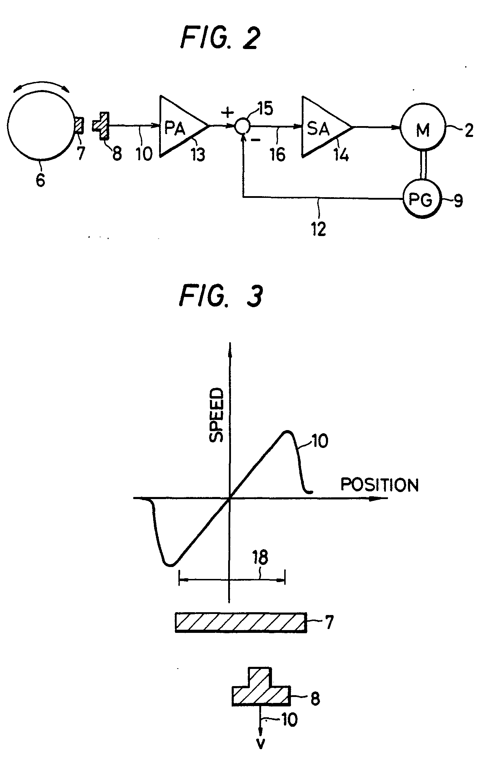

Figure 2 of the accompanying drawings is a block diagram showing the feed-back control system for the conventional stopping device. Figure 2 shows a position control amplifier 13; a speed control amplifier 14; a summing device 15; and a speed command 16, as well as the components of Figure 1.

In a device using an induction motor as the above-described electric motor, speed control is carried out as follows: a speed control device for reducing the speed to zero at a designated point is used in the stopping operation. More specifically, as shown in Figure 2, the difference between the speed signal 12 and the output signal 10 of the position detector 8 representing a target speed v (as indicated in a graph in Figure 3 of the accompanying drawings) is calculated to obtain a speed command 16. The speed is then controlled to the target speed v and zeroed so as to cause the shaft to stop at the desired point. In order to stop at this point, any given shaft position corresponds to a target speed v as indicated.

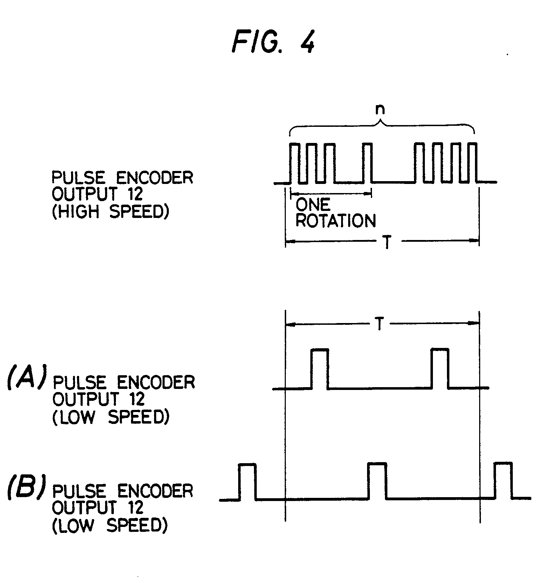

In the speed control device, speed control must be performed with high precision, especially when the shaft is at stopping speed near the designated stopping point, and therefore it is essential to obtain an accurate actual speed signal 12 from the motor shaft. In the conventional device, the speed control system is constructed using the pulse encoder 9 as a detector for obtaining the actual speed signal 12. Calculation of the speed with the pulse encoder 9 can be achieved by counting pulses per unit time as illustrated in Figure 4 of the accompanying drawings.

When, with a pulse encoder generating $N_0$ pulses per revolution, n pulses are counted in a period of time T, the speed is represented by

$$\frac{1}{N_0} \cdot \frac{n}{T}.$$

In this calculation, the resolution of speed detection is

$$\frac{1}{N_0} \cdot \frac{n}{T}$$

per pulse, and as indicated by waveform (A) and (B) in Fig. 4 which show pulse encoder output signals during low speed operation, an error of one pulse is caused by the difference of sampling times. Thus, the conventional device is disadvantageous in that the possible error is relatively large in the range of speed which is beyond the resolution of speed detection, and the accuracy of speed control is low in the range of low speeds typically involved in stopping operations. In order to eliminate these difficulties, the number N of pulses per revolution produced by the pulse encoder 9 may be increased thereby to increase the resolution of speed detection. However, this approach is disadvantageous in that the system becomes expensive because a precision pulse encoder must be used, and in order to count pulses without overflow during high speed operation, the number of places in the counter must be increased, with the result that the control circuit is made more intricate and expensive.

EP—A—0 032 301 discloses another known shaft position control system. In this system, during stopping of the shaft the motor is controlled exclusively by a position control system which compares a desired position with an actual shaft position, whereas in normal operation a speed control loop is employed.

An object of the invention is to provide a speed control arrangement for an electric motor which allows stopping accurately at a predetermined position without involving high hardware expenditure.

According to the invention there is provided a speed control arrangement for an electric motor having an output shaft comprising: position detecting means for producing a position signal representing angular position of said shaft; speed detecting means for producing a first speed signal representing the actual angular speed of said shaft; comparator means for comparing said first speed signal with a desired speed signal derived from said position signal and for producing a speed control signal in accordance with the comparison; and means for controlling the motor in accordance with said speed control signal whereby the shaft can be stopped at a predetermined angular position characterised by speed computing means for deriving a second speed signal representing actual speed of said shaft from said position signal, at least when said angular speed is below a predetermined value; and by switch means for selectively supplying either said first speed signal or said second speed signal to said comparator means, said switch means being arranged to supply said second speed signal only when said angular speed is below said predetermined value for a motor stopping operation.

For a better understanding of the invention and to show how the same may be carried into effect, reference will now be made, by way of example, to the accompanying drawings, in which:

Fig. 1 is an explanatory diagram showing the fundamental arrangement of a conventional rotary shaft stopping device with a speed detecting device;

Fig. 2 is a block diagram showing a control system in the conventional stopping device;

Fig. 3 is a graphical representation showing the characteristic of an output signal of a position detector;

Fig. 4 is a timing chart showing output signals of a pulse encoder which are speed detection signals;

Fig. 5 is a block diagram showing a preferred embodiment of the invention; and

Fig. 6 is a graphical representation indicating the characteristic of the output signal of a position detector in the preferred embodiment and showing the speed calculating principle of the invention.

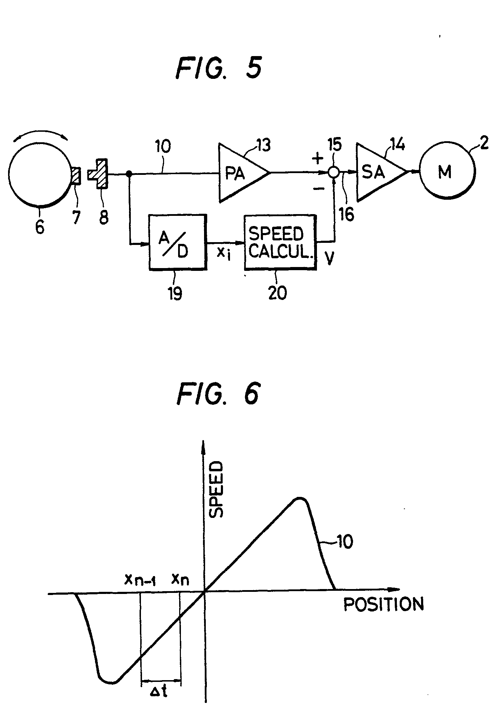

Figure 5 is a block diagram showing a speed detecting device constructed in accordance with the invention.

In Figure 5, reference numeral 19 designates an A/D (analog-to-digital) converter, and 20 a speed calculator such as a microprocessor Intel 8086. Other elements are the same as the elements having the same reference numerals in Figures 1 and 2.

The operation of this embodiment will now be described with reference to Figures 5 and 6.

At least when the rotary shaft 6 is near the target position where it is to be stopped, the position detector 8 senses the magnet 7 and outputs the position detection signal 10. The output signal 10 has a voltage/position characteristic of the same form as the speed/position characteristics shown in Figures 3 and 6. The position detector 8 operates not only to produce the position detection signal 10 but also to produce a high level signal when a linear region 18 of the characteristic curve has been reached. Upon receiving the high level signal, the speed calculator 20 is informed of the fact that the linear region 18 of the output signal 10 is reached. At least when the linear region 18 of the output signal 10 is reached, the analogue value of the signal 10 is converted into a digital value $X_i$ by the A/D converter 19. This digital position signal may be originally used as a speed target value. However, if the linear region 18 of the signal 10 is used, the digital position signal is proportional to the position of the magnet 7, that is, the position of the rotary shaft 6. In the speed calculator 20, position signals obtained in a sampling period of time $\Delta t$ are employed. That is, the difference $X_n - X_{n-1}$ between the position signal $X_{n-1}$ of the preceding sampling time is divided by the sampling period of time $\Delta t$. Thus, the actual speed V for every sampling time is obtained according to the following expression:

$$V = \frac{K_L(X_n - X_{n-1})}{\Delta t},$$

where $K_L$ is a proportional constant.

The difference between the actual speed V and the desired speed computed as dependent on the output signal 10 of the position detector (amplified by amplifier 13) is obtained as a speed command 16 which is applied to the electric motor 2.

This may be achieved by forming a negative analogue signal proportional to the actual speed V from the output of calculator 20 and adding this signal to the amplified position signal 10 by means of summing device 15.

Alternatively, as suggested above, the digital position signal $X_i$ may be compared with a digital actual speed signal to provide a digital speed control signal. Summing device 15 and amplifier 13 are then unnecessary. Of course, the digital speed control signal may be converted to an analogue signal 16 if desired.

It will be understood that in addition to the speed detecting device shown in Figure 5, a further speed detecting device is required for normal operation. This may use the pulse encoder 9 as shown in Figures 1 and 2. The speed detection signal 12 of the further speed detecting device is used during the ordinary operation mode of the electric motor 2, and in the stopping operation mode, an automatic switch or a manual switch is operated to use the speed detection signal of the speed detecting device 20 shown in Figure 5. It is of course advantageous to provide that both speed control signals (in respective modes) are of similar type, i.e. both analogue or both digital.

The further speed detecting device may also be provided by modifying the position detector 8 so that, during the ordinary operation of the electric motor, the position detector 8 produces one pulse per revolution of the rotary shaft and the pulses thus produces are utilized to detect the speed. In the stopping operation mode, the device may be switched over to operate as the speed detecting device of Fig. 5 by an automatic or manual switch. Furthermore, instead of the A/D converter, a speed calculator adapted to perform analog calculation by directly sampling or differentiating the output signal 10 of the position detector, which is an analogue signal, may be employed.

The speed detecting device according to the invention is considerably high in operating accuracy, compared with the conventional device, when the rotary shaft is rotating at a low speed immediately before stopping. Accordingly, the positional stopping accuracy is also high. Furthermore, the device is simple in construction and low in manufacturing cost because it is unnecessary to provide a precision pulse encoder.

It will be understood that one fundamental difference between the system of Figure 2 and that of Figure 5 is that, whilst the former derives a feed-back actual speed signal (12) independently of the desired speed signal, the latter derives both desired and actual speed signals from the same signal source.

## Claims

1. A speed control arrangement for an electric motor (2) having an output shaft (6) comprising: position detecting means (7, 8) for producing a position signal (10) representing angular position of said shaft (6); speed detecting means for producing a first speed signal representing the actual angular speed of said shaft (6); comparator means (15) for comparing said first speed signal with a desired speed signal derived from said position signal (10) and for producing a speed control signal (16) in accordance with the comparison; and means (14) for controlling the motor (2) in accordance with said speed control signal (16) whereby the shaft (6) can be stopped at a predetermined angular position characterised by speed computing means (19, 20) for deriving a second speed signal (V) representing actual speed of said shaft (6) from said position signal (10), at least when said angular speed is below a predetermined value; and by switch means for selectively supplying either said first speed signal or said second speed signal (V) to said comparator means (15), said switch means being arranged to supply said second speed signal only when said angular speed is below said predetermined value for a motor stopping operation.

2. An arrangement according to claim 1 characterised in that said speed signal (V) is derived by differentiating said position signal (10).

3. An arrangement according to claim 2 characterised in that said position detecting means (7, 8) is arranged such that said position signal (10) has a substantially linear region and in that said speed computing means (19, 20) is arranged to sample said position signal (10) in said linear region at integer multiples of a predetermined time interval ($\Delta t$) and to form a difference value from two sampled values of said position signal (10).

4. A speed control arrangement according to claim 2 characterised by:
a magnet (7) for mounting on a rotary shaft (6) of said motor (2);
a position detector (8) for detecting said magnet (7) when rotated by said rotary shaft (6) to produce an output signal (10) having a substantially linear region; and
said speed computing means (19, 20) being operable to sample said signal (10) in said linear region at integer multiples of a predetermined time interval ($\Delta t$) and performing a division in which a difference between a present sampled value and a preceding samples value of said signal (10) is divided by said time interval ($\Delta t$) to produce a speed control signal (16) applied to said motor (2).

5. An arrangement as claimed in claim 4 characterised in that said linear region corresponds to a range of low speed.

6. An arrangement as claimed in claim 4 or 5 characterised in that said speed computing means comprises an analog-to-digital converter (19) and a speed calculator (20), said output signal (10) produced by said position detector (8) being applied through said analog-to-digital converter (19) to said speed calculator (20), said speed calculator operating in a digital mode.

7. An arrangement as claimed in any one of claims 4 to 6 characterised by a difference forming device (15) for obtaining a difference (16) between said speed signal (V) produced by said speed computing means (19, 20) and said output signal (10) produced by said position detector (8) and supplying said difference (16) thus obtained as a speed command for said motor (2).

8. An arrangement according to any one of claims 1 to 7 characterised in that said desired speed is derived by amplifying said position signal (10).

9. An arrangement as claimed in claim 8 characterised by a position control amplifier (13), said output signal (10) produced by said position detector (8) being applied through said position control amplifier (13) to said device (15).

10. An arrangement as claimed in claim 7, 8 or 9 characterised in that an output (16) of said device (15) is applied through a speed control amplifier (14) to said motor (2).

11. A motor control system comprising an electrical motor (2) and a speed control arrangement according to any one of claims 1 to 10 connected to control the speed of said motor (2).

## Patentansprüche

1. Drehzahlsteueranordnung für einen Elektromotor (2) mit einer Abtriebswelle (6), umfassend: eine Positionsdetektiereinrichtung (7, 8) zum Erzeugen eines die Winkelposition der besagten Abtriebswelle (6) darstellenden Positionssignals (10); eine Drehzahldetektiereinrichtung zum Erzeugen eines ersten, die tatsächliche Winkelgeschwindigkeit der besagten Welle (6) darstellenden Drehzahlsignals; eine Vergleichseinrichtung (15) zum Vergleichen des besagten Drehzahlsignals mit einem gewünschten Drehzahlsignal, das von dem besagten Positionssignal (10) abgeleitet wird, und zum Erzeugen eines Drehzahlsteuersignals (16) entsprechend dem Vergleich; und eine Einrichtung (14) zum Steuern des Motors (2) entsprechend dem besagten Drehzahlsteuersignal (16), wobei die Welle (6) in einer vorbestimmten Winkelposition angehalten werden kann, gekennzeichnet durch eine Drehzahlberechnungseinrichtung (19, 20) zum Ableiten eines zweiten, die tatsächliche Drehzahl der besagten Welle (6) darstellenden Drehzahlsignals (V) von dem besagten Positionssignal (10) wenigstens dann, wenn die besagte Winkelgeschwindigkeit unter einem vorbestimmten Wert ist; und durch eine Schalteinrichtung zum wahlweisen Anlegen entweder des besagten ersten Drehzahlsignals oder des besagten zweiten Drehzahlsignals (V) an die besagte Vergleichseinrichtung (15), wobei die besagte Schalteinrichtung dafür eingerichtet ist, das besagte zweite Drehzahlsignal nur dann anzulegen, wenn die besagte Winkelgeschwindigkeit unter dem vorbestimmten Wert für eine Durchführung des Anhaltens des Motors ist.

2. Anordnung nach Anspruch 1, dadurch gekennzeichnet, daß das besagte Drehzahlsignal (V) durch Differenzierung des besagten Positionssignals (10) gewonnen wird.

3. Anordnung nach Anspruch 2, dadurch gekennzeichnet, daß die besagte Positionsdetektiereinrichtung (7, 8) derart eingerichtet ist, daß das besagte Positionssignal (10) einen im wesentlichen linearen Bereich aufweist, und daß die besagte Drehzahlberechnungseinrichtung (19, 20) dafür eingerichtet ist, das besagte Positionssignal (10) in dem besagten linearen Bereich zu ganzzahligen Vielfachen eines vorbestimmten Zeitintervalls (Δt) abzutasten und aus zwei abgetasteten Werten des besagten Positionssignals (10) einen Differenzwert zu bilden.

4. Drehzahlsteueranordnung nach Anspruch 2, gekennzeichnet durch:

einen Magnet (7) zur Anordnung auf einer rotierenden Welle (6) des besagten Motors (2);

einen Positionsdetektor (8) zum Detektieren des besagten Magneten (7) bei dessen Rotation durch die besagte rotierende Welle (6), um ein Ausgangssignal (10) mit einem im wesentlichen linearen Bereich zu erzeugen; und

Einsetzbarkeit der besagten Berechnungseinrichtung (19, 20) zum Abtasten des besagten Signals (10) in dem besagten linearen Bereich zu ganzzahligen Vielfachen eines vorbestimmten Zeitintervalls (Δt) und zum Durchführen eines Teilung, bei welcher eine Differenz zwischen einem gegenwärtigen abgetasteten Wert und einem vorangehenden abgetasteten Wert des besagten Signals (10) durch das besagte Zeitintervall (Δt) geteilt wird zum Erzeugen eines Drehzahlsteuersignals (16), das an den besagten Motor (2) angelegt wird.

5. Anordnung nach Anspruch 4, dadurch gekennzeichnet, daß der besagte lineare Bereich einem Bereich niedriger Drehzahl entspricht.

6. Anordnung nach Anspruch 4 oder 5, dadurch gekennzeichnet, daß die besagte Drehzahlberechnungseinrichtung einen Analog/Digital-Konverter (19) und einen Drehzahlkalkulator (20) umfaßt, wobei das besagte, von dem besagten Positionsdetektor (8) erzeugte Ausgangssignal (10) über den besagten Analog/Digital-Konverter (19) an den besagten Drehzahlkalkulator (20) angelegt wird, der in einem Digitalmodus arbeitet.

7. Anordnung nach einem der Ansprüche 4 bis 6, gekennzeichnet durch eine Differenzen bildende Einrichtung (15) zum Erhalten einer Differenz (16) zwischen dem besagten Drehzahlsignal (V), das durch die besagte Drehzahlberechnungseinrichtung (19, 20) erzeugt wird, und dem besagten Ausgangssignal (10), das durch den besagten Positionsdetektor (8) erzeugt wird, und zum Liefern der so erhaltenen Differenz (16) als einen Drehzahlbefehl für den besagten Motor (2).

8. Anordnung nach einem der Ansprüche 1 bis 7, dadurch gekennzeichnet, daß die besagte gewünschte Drehzahl durch Verstärken des besagten Positionssignals (10) gewonnen wird.

9. Anordnung nach Anspruch 8, gekennzeichnet durch einen Positionssteuerverstärker (13), wobei das besagte Ausgangssignal (10), das durch den besagten Positionsdetektor (8) erzeugt wird, über den besagten Positionssteuerverstärker (13) an die besagte Vorrichtung (15) angelegt wird.

10. Anordnung nach Anspruch 7, 8 oder 9, dadurch gekennzeichnet, daß ein Ausgang (16) der besagten Vorrichtung (15) über einen Drehzahlsteuerverstärker (14) an den besagten Motor (2) angelegt ist.

11. Motorsteuersystem, umfassend einen elektrischen Motor (2) und eine Drehzahlsteueranordnung nach einem der Ansprüche 1 bis 10, die angeschlossen ist zur Steuerung der Drehzahl des besagten Motors (2).

**Revendications**

1. Un agencement de réglage de vitesse pour un moteur électrique (2) ayant un arbre de sortie (6) comprenant: des moyens de détection de position (7, 8) pour produire un signal de position (10) représentant la position angulaire dudit arbre (6); un moyen de détection de la vitesse pour produire un premier signal de vitesse représentant la vitesse angulaire réelle dudit arbre (6); un moyen de comparaison (15) pour comparer ledit premier signal de vitesse à un signal de vitesse souhaité dérivé dudit signal de position (10) et pour produire un signal de réglage de vitesse (16) conformément à la comparaison; et un moyen (14) pour régler le moteur (2) conformément avec ledit signal de réglage de vitesse (16) au moyen duquel l'arbre (6) peut être arrêté à une position angulaire prédéterminée caractérisée par les moyens de calcul de la vitesse (19, 20) pour dériver un second signal de vitesse (V) représentant la vitesse réelle dudit arbre (6) à partir dudit signal de position (10), au moins lorsque ladite vitesse angulaire est au-dessous d'une valeur prédéterminée; et par un moyen de commutation pour envoyer de façon sélective soit ledit premier signal de vitesse soit ledit second signal de vitesse (V) audit moyen de comparaison (15), ledit moyen de commutation étant agencé pour fournir ledit second signal de vitesse uniquement lorsque ladite vitesse angulaire est au-dessous de ladite valeur prédéterminée pour une opération d'arrêt du moteur.

2. Un agencement selon la revendication 1 caractérisé en ce que ledit signal de vitesse (V) est dérivé en différenciant ledit signal de position (10).

3. Un agencement selon la revendication 2 caractérisé en ce que lesdits moyens de détection de position (7, 8) sont agencés de façon que ledit signal de position (10) à une région sensiblement linéaire et en ce que lesdits moyens de calcul de la vitesse (19, 20) sont agencés pour échantillonner ledit signal de position (10) dans ladite région linéaire à des multiples entiers d'un intervalle de temps prédéterminé (Δt) et pour former une valeur de différence à partir de deux valeurs échantillonnées dudit signal de position (10).

4. Un agencement de réglage de vitesse selon la revendication 2 caractérisé en ce que:

un aimant (7) qui doit être monté sur un arbre rotatif (6) dudit moteur (2);

un détecteur de position (8) pour détecter ledit aimant (7) lorsqu'il tourne sous l'action dudit arbre rotatif (6) pour produire un signal de sortie (10) ayant une région sensiblement linéaire; et

lesdits moyens de calcul de la vitesse (19, 20) étant utilisable pour échantillonner ledit signal (10) dans ladite région linéaire à des multiples entiers d'un intervalle de temps prédéterminé (Δt) et effectuant une division dans laquelle une différence entre une valeur échantillonnée présente et une valeur d'échantillons précédente dudit signal (10) est divisée par ledit intervalle de temps (Δt) pour produire un signal de réglage de vitesse (16) appliqué audit moteur (2).

5. Un agencement selon la revendication 4 caractérisé en ce que ladite région linéaire correspond à un régime de faible vitesse.

6. Un agencement selon la revendication 4 ou 5 caractérisé en ce que ledit moyen de calcul de la vitesse comprend un convertisseur analogique-numérique (19) et un calculateur de vitesse (20), ledit signal de sortie (10) produit par ledit détecteur de position (8) étant appliqué par l'intermédiaire dudit convertisseur analogique-numérique (19) audit calculateur de vitesse (20), ledit calculateur de vitesse fonctionnant dans un mode numérique.

7. Un agencement selon une quelconque des revendications 4 à 6 caractérisé par un dispositif de formation de différence (15) pour obtenir une différence (16) entre ledit signal de vitesse (V) produit par lesdits moyens de calcul de vitesse (19, 20) et ledit signal de sortie (10) produit par ledit détecteur de position (8) et assurant ladite différence (16) ainsi obtenue en tant qu'une commande de vitesse pour ledit moteur (2).

8. Un agencement selon une quelconque des revendications 1 à 7 caractérisé en ce que ladite vitesse souhaitée est dérivée en amplifiant ledit signal de position (10).

9. Un agencement selon la revendication 8 caractérisé par un amplificateur de réglage de position (13), ledit signal de sortie (10) produit par ledit détecteur de position (8) étant appliqué par l'intermédiaire dudit amplificateur de réglage de position (13) audit dispositif (15).

10. Un agencement selon la revendication 7, 8 ou 9 caractérisé en ce qu'une sortie (16) dudit dispositif (15) est appliquée par l'intermédiaire d'un amplificateur de réglage de la vitesse (14) audit moteur (2).

11. Un système de réglage pour un moteur comprenant un moteur électrique (2) et un agencement de réglage de vitesse selon une quelconque des revendications 1 à 10 connecté pour régler la vitesse dudit moteur (2).

# EP 0 134 029 B1

## FIG. 1

CONTROL UNIT

1

10

11

12

MOTOR

2

3

4

5

6

7

8

9

# FIG. 2

# FIG. 3

*FIG. 4*

PULSE ENCODER
OUTPUT 12
(HIGH SPEED)

ONE
ROTATION

*(A)* PULSE ENCODER
OUTPUT 12
(LOW SPEED)

*(B)* PULSE ENCODER
OUTPUT 12
(LOW SPEED)

## FIG. 5

## FIG. 6